# EUROPEAN PATENT SPECIFICATION

(11) **EP 1 569 796 B1**
(45) Date of publication and mention of the grant of the patent: **09.05.2012**
(21) Application number: 03783783.8
(22) Date of filing: 21.11.2003
(51) Int. Cl.: B32B 37/15, B29C 43/28, B29C 43/22

(54) **Method of fabrication of a composite sheet mirror**
Verfahren zur Herstellung eines Spiegels aus Verbundkunststoff
Méthode de fabrication d'un mirroir en composite

(30) Priority: 22.11.2002 US 302754
(43) Date of publication of application: 07.09.2005
(73) Proprietor: Evonik CYRO LLC, Parsippany, NJ 07054-0677 (US)
(72) Inventor: SPARKS, Darrell, L., Kennebunk, ME 04043 (US); LAFONTAINE, Grant, B., Trumbull, CT 06611 (US)
(74) Representative: Wolf, Oliver
(86) International application number: PCT/US2003/037760
(87) International publication number: WO 2004/048422

(56) References cited:
- WO-A1-00/32875
- US-A- 3 660 200
- US-A1- 4 306 927
- US-A1- 5 164 032
- US-A1- 5 505 808
- US-A1- 2001 036 543
- US-A1- 2002 146 595
- US-A1- 2003 143 383
- US-B1- 6 364 989
- US-B1- 6 364 989

## Description

### FIELD OF THE INVENTION

This invention relates to a method for producing a polymer-based mirror.

More specifically, the invention relates to a method for producing either a high-reflectance mirror or a colored mirror by laminating a polymeric substrate with a reflective layer or a series of layers.

### BACKGROUND OF THE INVENTION

Most plastic (polymer based) mirrors are produced by vacuum metallization of a substrate polymer in vacuum chambers or by depositing metal from a solution or from vapor onto the polymer surface. These processes can be carried out either on a film or on more rigid sheet products. Polymers commonly mirrorized include polymethyl methacrylate (PMMA), polycarbonate, polyethylene terephthalate (PET), polystyrene, and polyethylene terephthalate glycol (PETG), and combinations of the foregoing.

Heat lamination is a well known technique by which a laminating film is fused to a polymeric substrate but had not heretofore been used in the production of polymeric mirrors. For example, published International Patent Application WO/ 01/19591 A1 (to H. Ohanesian) disclosed a method and apparatus for the application of a decorative laminating film to a polymeric substrate. In that disclosure, a melted polymeric composition is forced through an extrusion die and is then laminated with a decorative film of 20 to 500 microns in thickness by applying pressure as the composition and laminating film passes through rollers, causing the decorative film and polymeric composition to fuse.

A method for continuously preparing a sheet product having a mirror-like surface is known from document US 5,164,032. This method comprises the steps of
(a) continuously manufacturing a polymeric substrate;
(b) applying a reflective film to said polymeric substrate as the polymeric substrate is manufactured to form a composite; and
(c) continuously forming the composite by applying deformation heat and pressure using calendar rolls to produce a rigid final article having a reflective surface with a mirror-like appearance.

### SUMMARY OF THE INVENTION

The present invention applies heat lamination, which has henceforth been used to fuse layers of polymer sheet/film to the new use of producing a rigid polymer mirror.

In a first aspect of the invention, a method for producing a rigid high-reflectance mirror comprises the lamination of a polymeric substrate with a high-reflectance film that has been metallized by deposition of metal from vapor or plasma.

In a second aspect, the invention provides a method of producing a colored mirror by the application of a reflective multi-layer film whose combined refractive index causes the film to have the appearance of a colored mirror.

### DETAILED DESCRIPTION OF THE INVENTION

Before the present methods are described, it is to be understood that this invention is not limited to the particular methods, compositions, and experimental conditions described, as such methods may vary. It is also to be understood that the terminology used herein is for the purpose of describing particular embodiments only, and is not intended to be limiting, as the scope of the present invention is to be defined only by the appended claims.

Substrates suitable for use in the invention include any polymeric material such as acrylic from which a sheet product may be produced by calendering, including, but not limited to the following:

amorphous polyester resins (e.g. polymethylacrylate);

polyalkylene terephthalates (e.g polyethylene terephthalate, polybutylene

terephthalate, and poly-1,4-cyclohexanedimethylene terephthalate);

copolymers of polyalkylene terephthalate (e.g. copolymers of terephthalic acid or esters thereof with any of the following : i) napthalene dicarboxylic acid or esters thereof; ii) isophthalic acid or esters thereof; iii) phthalic acid or esters thereof; iv) alkane glycols; v) cycloalkane glycols; vi) alkane dicarboxylic acids; and vii) cycloalkane dicarboxylic acids; polyethylene napthalate (PEN) and isomers thereof; copolymers of polyethylene napthalate (PEN) including those of the (2,6-,1,4-, 1,5-, 2,7-, and/or 2,3- napthalene dicarboxylic acids, or esters thereof, with any of the following : i) napthalene dicarboxylic acid or esters thereof; ii) isophthalic acid or esters thereof; iii) phthalic acid or esters thereof; iv) alkane glycols; v) cycloalkane glycols; vi) alkane dicarboxylic acids; and vii) cycloalkane dicarboxylic acids;polycarbonate resins including acrylonitrile butadiene styrene resins, polystyrene, syndiotactic polystyrene, syndiotactic poly alpha-methyl styrene, syndiotactic polydichlorostyrene, copolymers and blends of the foregoing styrenes;styrene copolymers such as styrene butadiene copolymers and styrene acrylonitrile copolymers, 4,4'-bibenzoic acid and ethylene glycol; polyacrylates such as polybutylacrylate and polymethylacrylate;

polyimides such as polyacrylic imides and polyether imides; substituted and unsubstituted vinyl polymers and their copolymers; and other polymers processed by calendering including polyvinylchloride (PVC) as well as blends of two or more of the foregoing polymers or copolymers.

In an embodiment of the invention, a reflective film composed of multiple very thin layers, which, owing to the combined index of refraction and thicknesses gives the appearance of a colored mirror, is bonded to the polymer substrate. In a particular embodiment, the reflective film may be composed of about 300 to about 400 layers and has a total thickness of about 0.050 mm (002 inch) to about 0.076 mm (003 inch).

To improve adhesion to the acrylic or polymeric substrate, the reflective film, whether metallized or not, may be treated with an adhesion promoting coating ("a primer") to further ensure bonding to the substrate. Application of such a primer is typically done by the manufacturer and its use is a known and accepted technique in lamination. However, when compatible polymer films are chosen for the substrate and the mirrorized film or colored film nearest the substrate, no adhesion promotor may be necessary.

### EXAMPLES

The following illustrative examples are presented so as to provide those of ordinary skill in the art with a complete disclosure and description of how to make and use the articles and methods of the invention.

A series of six films were applied to an acrylic sheet 2 mm in thickness by feeding the films over the second roll of a three or four roll calendar system into a melt pool. The melt pool was on the roll over which the film was run. Tension was applied to the film to remove and prevent the formation of wrinkles.

1. Mirrorized Film

The film used was a mirrorized polyethyleneterepthalate type material which had a heat activated adhesive applied by the manufacturer over the mirrorized surface. Film width was 60.96 cm (24").

2. Primed Color Mirror

This film had a PVdC primer applied by the manufacturer. The roll was 121.92 cm (48") wide. The film itself adheres to the sheet.

3. Polymeric Mirror Film

Results similar to film number 2 above.

4. High Temperature Polymeric Mirror Film

Results similar to film number 2 above.

## Claims

1. A method for continuously preparing a polymer-based mirror , comprising:
(a) Continuously manufacturing a polymeric substrate
(b) Applying a reflective film to the polymeric substrate as the Polymeric substrate is manufactured to form a composite, wherein the reflective film has at least two layers which, when the layers are placed into proximity to each other, cause the film to have a high-reflectance or colored mirror appearance; and
(c) Continuously forming the composite by applying deformation heat and pressure using calendar rolls to produce a rigid final article having a reflective surface showing a high-reflectance or colored mirror appearance.

2. The method of claim 1.
wherein the reflective film has a first side and a second side, the first side being vacuum metalized and the first or second side optionally having a coating which facilitates adhesion to hot polymeric material applied thereon.

3. The method of claim 1,
wherein a surface of the relective film which is not in continuous contact with another of the layers of the film has had a primer capable of promoting adhesion to the polymeric substrate applied thereto.

4. The method of any of claims 2 to 3,
wherein the reflective film is comprised of a material selected from the group consisting of polyethylene terephthalate, polyethylene napthalate, PMMA, polycarbonate, and combinations thereof.

5. The method of claims 3 or 4,
wherein the forming of the composite takes place at polymer melt temperature.

6. The method of any of claims 1 to 5,
wherein the polymeric substrate is selected from the group consisting of PMMA, polycarbonate, polyethylene terephthalate, polystyrene, and PETG.

7. The method of any of claims 1 to 6,
wherein the polymeric substrate is an acrylic polymer.

8. The method of any of claims 1 to 7,
wherein the reflective film has undergone coating to increase its scratch resistance or impart anti-static properties.

## Patentansprüche

1. Verfahren zum kontinuierlichen Herstellen eines Spiegels auf Polymerbasis, umfassend:
(a) kontinuierliches Herstellen eines Polymersubstrats;
(b) Aufbringen eines reflektierenden Films auf das Polymersubstrat, während das Polymersubstrat hergestellt wird, um einen Komposit zu bilden, wobei der reflektierende Film wenigstens zwei Schichten aufweist, die, wenn die Schichten in Nachbarschaft zueinander angeordnet sind, bewirken, dass der Film ein hohes Reflexionsvermögen oder ein gefärbtes Spiegelaussehen aufweist; und
(c) kontinuierliches Bilden des Komposits durch Anwenden von Verformungswärme und Druck unter Verwendung von Kalanderwalzen, um einen starren, fertigen Gegenstand mit einer reflektierenden Oberfläche, die ein hohes Reflexionsvermögen oder ein gefärbtes Spiegelaussehen aufweist, herzustellen.

2. Verfahren gemäß Anspruch 1,
wobei der reflektierende Film eine erste Seite und eine zweite Seite aufweist, wobei die erste Seite vakuummetallisiert ist und die erste oder die zweite Seite gegebenenfalls eine Beschichtung aufweist, die das Anhaften an heißes Polymermaterial, das darauf aufgebracht wird, erleichtert.

3. Verfahren gemäß Anspruch 1,
wobei eine Oberfläche des reflektierenden Films, die nicht in durchgehendem Kontakt mit einer anderen der Schichten des Films steht, eine Grundierung aufgewiesen hatte, die fähig ist, das Anhaften an das Polymersubstrat, das darauf angebracht wird, zu fördern.

4. Verfahren gemäß einem der Ansprüche 2 bis 3,
wobei der reflektierende Film ein Material umfaßt, ausgewählt aus der Gruppe bestehend aus Polyethylenterephthalat, Polyethylennaphthalat, PMMA, Polycarbonat und Kombinationen davon.

5. Verfahren gemäß Anspruch 3 oder 4,
wobei das Bilden des Komposits bei Polymer-Schmelztemperatur erfolgt.

6. Verfahren gemäß einem der Ansprüche 1 bis 5,
wobei das Polymersubstrat ausgewählt ist aus der Gruppe bestehend aus PMMA, Polycarbonat, Polyethylenterephthalat, Polystyrol und PETG.

7. Verfahren gemäß einem der Ansprüche 1 bis 6,
wobei das Polymersubstrat ein Acrylpolymer ist.

8. Verfahren gemäß einem der Ansprüche 1 bis 7,
wobei der reflektierende Film beschichtet wurde, um seine Kratzfestigkeit zu erhöhen oder antistatische Eigenschaften zu verleihen.

## Revendications

1. Procédé pour préparer en continu un miroir à base de polymère comprenant :
(a) la fabrication en continu d'un substrat polymère
(b) l'application d'un film réfléchissant sur le substrat polymère, le substrat polymère étant fabriqué pour former un composite, le film réfléchissant ayant au moins deux couches qui, lorsque les couches sont placées à proximité l'une de l'autre, amènent le film à avoir un facteur de réflexion élevé ou un aspect de miroir coloré ; et
(c) la formation continue du composite par application d'une chaleur et une pression de déformation en utilisant des rouleaux de calandre pour produire un article final rigide ayant une surface réfléchissante présentant un facteur de réflexion élevé ou un aspect de miroir coloré.

2. Procédé de la revendication 1,
dans lequel le film réfléchissant a un premier côté et un deuxième côté, le premier côté étant métallisé sous vide et le premier côté ou le deuxième côté ayant facultativement un revêtement qui facilite l'adhésion à un matériau polymère chaud appliqué sur celui-ci.

3. Procédé de la revendication 1,
dans lequel une surface du film réfléchissant qui n'est pas en contact continu avec une autre des couches du film a eu une couche primaire capable d'induire l'adhésion au substrat polymère appliqué sur celui-ci.

4. Procédé de l'une quelconque des revendications 2 à 3,
dans lequel le film réfléchissant comprend un matériau choisi dans le groupe constitué de polyéthylène-téréphtalate, de polyéthylène-naphtalate, de PMMA, de polycarbonate, et de combinaisons de ceux-ci.

5. Procédé de la revendication 3 ou 4,
dans lequel la formation du composite se produit à la température de fusion du polymère.

6. Procédé de l'une quelconque des revendications 1 à 5,
dans lequel le substrat polymère est choisi dans le groupe constitué du PMMA, du polycarbonate, du polyéthylène-téréphtalate, du polystyrène, et du PETG.

7. Procédé de l'une quelconque des revendications 1 à 6,
dans lequel le substrat polymère est un polymère acrylique.

8. Procédé de l'une quelconque des revendications 1 à 7,
dans lequel le film réfléchissant a subi une enduction pour augmenter sa résistance aux rayures ou lui conférer des propriétés antistatiques.
